(19) Europäisches Patentamt
European Patent Office
Office européen des brevets

(11) **EP 4 604 738 B1**

(12) **EUROPEAN PATENT SPECIFICATION**

(45) Date of publication and mention
of the grant of the patent:
**22.07.2026 Bulletin 2026/30**

(21) Application number: **23790356.2**

(22) Date of filing: **19.10.2023**

(51) International Patent Classification (IPC):
*A23G 9/20* (2006.01)    *A23C 9/13* (2006.01)
*A23C 9/152* (2006.01)    *A23C 13/12* (2006.01)
*A23P 30/40* (2016.01)    *A47J 31/44* (2006.01)
*B01F 23/232* (2022.01)    *B01F 23/235* (2022.01)
*B01F 25/31* (2022.01)    *B01F 25/452* (2022.01)
*A23C 21/00* (2025.01)    *B01F 25/314* (2022.01)

(52) Cooperative Patent Classification (CPC):
**A23G 9/20; A23C 9/1307; A23C 9/1524;**
**A23C 13/12; A23C 21/00; A23G 3/14; A23P 30/40;**
**A47J 31/4485; B01F 23/2323; B01F 23/235;**
**B01F 25/31421;** A23C 2210/30; A23C 2240/20

(86) International application number:
**PCT/EP2023/079141**

(87) International publication number:
**WO 2024/083977 (25.04.2024 Gazette 2024/17)**

(54) **METHOD AND SYSTEM FOR DISPENSING A PRODUCT**

VERFAHREN UND SYSTEM ZUR AUSGABE EINES PRODUKTS

PROCÉDÉ ET SYSTÈME DE DISTRIBUTION D'UN PRODUIT

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **21.10.2022 EP 22202993**

(43) Date of publication of application:
**27.08.2025 Bulletin 2025/35**

(73) Proprietor: **FrieslandCampina Nederland B.V.**
**3818 LE Amersfoort (NL)**

(72) Inventors:
• **DOTREMONT, Chris Thérèse Emilienne**
**6708 WH Wageningen (NL)**
• **STEEGMANS E/V ZIJFFERS, Maartje Louisa**
**Josepha**
**6708 WH Wageningen (NL)**
• **MASSA, Mark Robert René**
**6708 WH Wageningen (NL)**
• **POETS, Robert Matheus Adriaan**
**6708 WH Wageningen (NL)**

(74) Representative: **FrieslandCampina IP Department**
**Bronland 20**
**6708 WH Wageningen (NL)**

(56) References cited:
EP-B1- 2 268 173    WO-A1-2022/066019
JP-A- 2018 051 483    US-A1- 2020 360 946

**Description**

Field of the invention

The invention relates to a method for dispensing a foamed food product, for example a cream, or aerated dessert, using a microfiltration device. The invention furthermore relates to a foamed food product dispensing system configured for carrying out such a method, and to the use of a microfiltration wall in a foamed food product dispensing system configured for carrying out such a method.

Background to the invention

Foamed food product dispensing systems and methods for dispensing foamed food products using such dispensing systems are known in the art.

WO2022/066019, for example, discloses a foamed product dispensing system, wherein the system includes: a product dispensing machine, configured to receive an exchangeable product container; a product container, configured to cooperate with he product dispensing machine, after placement in the machine; wherein the product container contains a foamable product, preferably a food product, for example cream, wherein the product container is provided with a product processing unit including a frothing device having a product entrance for receiving product and a product exit for discharging product, wherein the processing unit is connectable to a gas supply for gas to the product, wherein the system is configured to dispense foamed product at a predetermined overrun which is larger than 200%.

EP2268173 discloses a method for dispensing a foamed product (P), for example a food product, characterized in that product is supplied to a microfiltration device, gas is supplied via the microfiltration device to the product (P), and that the product (P) downstream of the microfiltration device undergoes a mixing treatment and/or undergoes a controlled pressure reduction.

US2020/360946 relates to a portable apparatus for dispensing and foaming of a product, including: a product container which contains a product that is to be foamed by and dispensed from the apparatus; a gas container, at least containing a gas, wherein he gas substantially does not contain any greenhouse gases such as $N_2O$; a dispersion device, having a product entrance that is connectable to the product container for receiving product, the dispersion device further being connectable to the gas container for supplying the gas to the product during product discharge; a processing device downstream of the dispersion device for performing a mixing treatment and/or pressure reduction on the product provided with the gas; and a product dispensing head, being part of a top section of the apparatus and being arranged downstream of the processing device.

JP2018-051483 provides a methane fermentation treatment apparatus comprising a hollow fiber membrane module.

Further, WO2011/028117 discloses a system and method with which a particular stable foamed product is obtained in a particularly efficient manner, with relatively inexpensive, durable and relatively low-energy means, whereby in particular a constant product quality is realized. More particularly, it discloses a method for dispensing a foamed product, characterized in that gas is supplied to a product via a microfiltration device, in particular for introducing gas bubbles into the product for forming a foamed and/or aerated product. Here, in particular, product is supplied to the microfiltration device, in order to be provided with gas. Thus, the microfiltration device can effect gas bubble formation in the product. It is described that the microfiltration device comprises in particular a rigid wall, which separates a product feed-through space from a gas supply space. The filtration wall, also denoted as membrane, is preferably provided with a large number of flow-through channels (extending, for instance, straight through this wall, from the gas supply space to the product feed-through space), which channels are at least provided with relatively narrow outflow mouths (the channels can each also be narrow channels). It was, however, found that the foaming performance deteriorates over time, which is obviously undesired. Furthermore, it was found that adsorption of proteins and/or fat onto the surface of the membrane and/or on the inside of membrane pores lead to reduced membrane operating lifetime.

The objective underlying the present invention is therefore to provide an improved foamed food product dispensing system comprising a microfiltration device and a method for dispensing foamed food products using such a dispensing system, wherein a more constant foaming performance is obtained and/or the operating lifetime of said microfiltration device is extended.

Summary of the invention

It was found that the aforesaid objective could be met by using a specific microfiltration wall in a foamed food product dispensing system comprising a microfiltration device. By using the specific microfiltration wall according to the invention, a particular constant product quality is realized for the foamed food product and/or the operating lifetime of said microfiltration device is extended.

Thus, in a first aspect, the invention relates to a method for dispensing a foamed food product, characterized in that

- a food product is supplied to a microfiltration device provided with a microfiltration wall having gas transmissive pores which separates a first space from a second space,
- wherein the food product is passed through the first space, flowing along the microfiltration wall, and gas is supplied to the second space, or vice versa, such that the gas can be injected via the microfiltration wall into the food product,
- wherein the food product undergoes an overrun that is in the range of 120-450%,
- wherein the surface of the microfiltration wall on the side along which the food product flows is hydrophobic, said surface having a contact angle with water of 110° or more, and
- wherein the microfiltration wall has a porosity of between 60% and 90%.

In a further aspect, the invention relates to a foamed food product dispensing system, configured for carrying out a method of the invention.

In a yet further aspect, the invention relates to the use of the specific microfiltration wall of the present invention in a foamed food product dispensing system configured for carrying out the method of the invention which comprises a microfiltration device, in order to extend the operating lifetime of the microfiltration device and/or diminish fluctuations in foaming performance.

Detailed description of the invention

In a first aspect, the invention relates to a method for dispensing a foamed food product, characterized in that

- a food product is supplied to a microfiltration device provided with a microfiltration wall having gas transmissive pores which separates a first space from a second space,
- wherein the food product is passed through the first space, flowing along the microfiltration wall, and gas is supplied to the second space or vice versa such that the gas can be injected via the microfiltration wall into the food product,
- wherein the food product undergoes an overrun that is in the range of 120-450%,
- wherein the surface of the microfiltration wall on the side along which the food product flows is hydrophobic, said surface having a contact angle with water of 110° or more, and
- wherein the microfiltration wall has a porosity of between 60% and 90%.

If a substrate has a contact angle of less than 90°, this means that water will tend to wet the surface of the substrate (i.e. it is hydrophilic), whereas with a contact angle of greater than 90°, it means that water will not tend to wet the surface of the substrate (i.e. it is hydrophobic). The surface of the microfiltration wall according to the invention is super hydrophobic, which means that its surface has a contact angle with water of 110° or more. The microfiltration wall according to the invention preferably has a contact angle with water of at least 118°, more preferably of at least 120° or more, and most preferably at least 130° or more.

The contact angle of a substrate with water is defined as being the contact angle with water, measured after immersion in water at 20°C for 3 days. Suitable methods for measuring the contact angle of a surface with water will be apparent for those skilled in the art. A suitable method is to perform the water contact angle measurements with a Contact angle DATAPHYSICS OCA-2 goniometer, managed by OCA-2 software, by using 3μl droplets of double distilled water and diiodomethane.

The porosity of the microfiltration wall used in accordance with the present invention has a porosity of between 60% and 90%. The porosity of the membrane is calculated using the average mass of the polymer material and the mass of liquid in the membrane. The density of the membrane polymer and liquid is derived from literature or, if unknown in literature can be determined using the techniques known in the art. The mass of a membrane filled with a liquid is measured using a gravimetric "pat and weight" method. In the pat and weight method, the membrane is immersed in a wetting fluid (in this case isopropyl alcohol) for 24 h and is weighted immediately after removing the fluid by patting off the surface and gently blowing off the liquid in the internal channel of the hollow fiber with compressed air. The process is performed repeatedly (3 repetitions) and the weight of the wet and dry membrane is measured. By comparing the mass of the wet and dry membranes, the porosity of the membranes can be calculated using the following equation:

$$\text{Porosity} = [\,1 - \{\,(m_f/\rho_f)\,/\,(m_m/\rho_m + m_f/\rho_f)\,\}\,]\,\times\,100\%$$

with

$m_m$ = mass of membrane, g
$m_f$ = mass of fluid in the membrane, g
$\rho_m$ = density of membrane, $g/cm^3$
$\rho_f$ = density of fluid, $g/cm^3$

It is important that the porosity of the microfiltration wall according to the invention lies between 60% and 90%, preferably between 70% and 90%, and most preferably between 75% and 90%. It was found that if the porosity of the microfiltration wall is too low, the pressure build-up over the microfiltration wall is too high, which is undesired. If the porosity of the membrane is more than 90%, the mechanical strength of the membrane will be insufficient for practical use.

Preferably, the microfiltration wall used according to the invention has gas transmissive pores having a mean pore size K in the range of 0.1-5 microns, in particular a mean pore size of at least 0.2 micron (in particular greater than 0.3 micron) and less than 3 microns. Most preferably, the microfiltration wall is a microfiltration wall having an asymmetric structure and a mean pore size range of 0.1 - 5 micron, most preferably a mean pore size range of 0.1 - 2 micron. In case of an asymmetric membrane, the more open side of said membrane is preferably on the side along which the food product flows. It was found that such a set-up has a beneficial effect on operational pressure, which is especially advantageous in case of more viscous products that need to be dispensed.

Pore size and pore size distribution are measured via Gas Liquid Porometry, also known as Capillary Flow Porometry (CFP). This technique, which is commonly known in the art, is based on the displacement of an inert and nontoxic wetting liquid embedded in a porous network by applying an inert pressurized gas. Therefore, only through pores are measured. For asymmetric membranes CFP is suitable for measuring pore size and pore size distribution of the support layer, the techniques is inadequate to measure the large skin pores. The size of the skin pores is determined by SEM.

More particularly, CFP is based on the following (see https://wiki.anton-paar.com/sg-en/basics-of-capillary-flow-porometry): a sample under evaluation is wetted with a liquid to fill at least all through pores. Increasing gas (nitrogen) pressure ($P$) is applied to one side of the sample. The liquid is expelled from each through pore according to its size (pore diameter d) at a defining pressure according to the following equation:

$$P = (4\gamma \cos \theta) / d$$

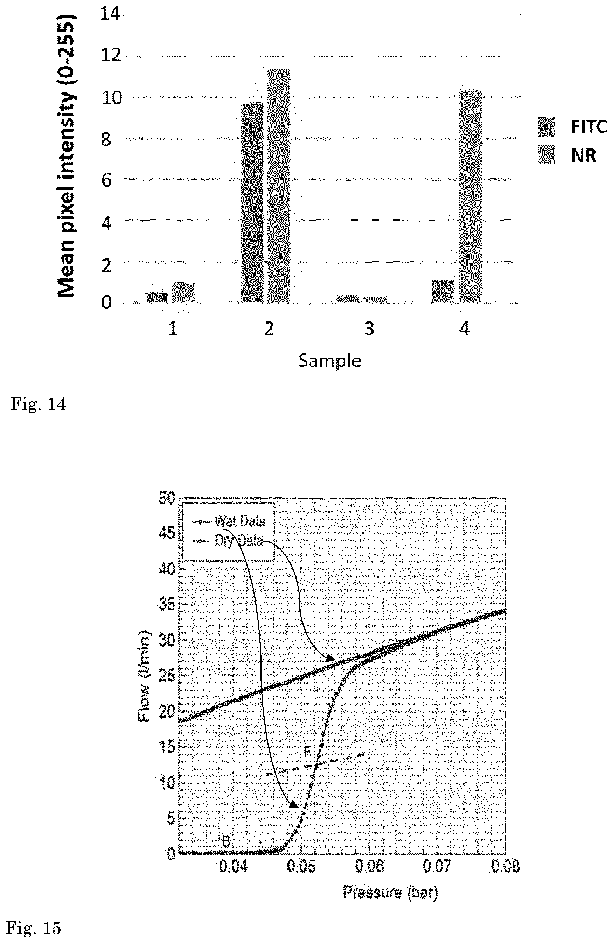

Where $\gamma$ is the surface tension of the liquid and $\theta$ is the contact angle between the liquid and the sample. The resulting flow of gas through empty pores is measured to calculate the largest pore size from the bubble point (point B, Fig 15; This Figure shows flow versus pressure data for measured "wet" and "dry" runs; also showing calculated "half dry data" (dotted line) and bubble point pressure 'B' and pressure 'F' used to calculate mean flow pore size).

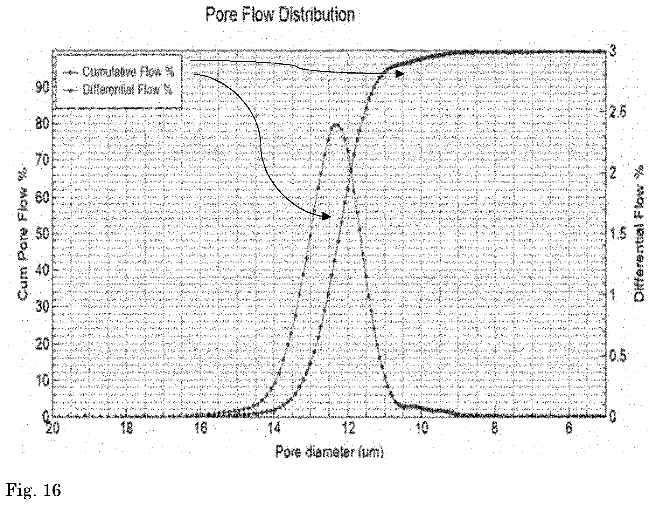

A second data set of flow versus pressure through the completely dry sample is used in combination with the wet flow data to calculate mean flow pore size (F, Figure 16) and a pore size distribution of all through pores within the range of the measurement system. (Figure 16 shows pore size distributions: pore diameter as a function of flow). The largest pore (upper boundary of the pore size distribution) is determined by the flow at which the wet flow data linearizes (i.e. basically equal to the dry flow rate). The pore size distribution is normally represented as cumulative flow (percentage of total or volume per unit time) or differential flow, the first derivative of the cumulative curve as shown in Figure 16.

The CFP measurements are carried out using Porolux 500 equipment, a $N_2$ flow of 100 ml/min, with the assumption that the pores have a spherical shape, and with Quantachrome's Porofil™ Wetting Fluid (see https://www.quantachrome.com/porometer/porofil.html) as the wetting liquid (having a fluid tension of 16 dyn/cm and a contact angle = 0).

The wording "a microfiltration wall having an asymmetric structure" has the meaning as is conventional in the art, that is it is meant to denote any membrane having an anisotropic structure throughout its cross section (in contrast to microfiltration walls having a symmetric structure, meaning that said membranes have a uniform cross section). Typically, asymmetric membranes consists of a number of layers, each with different structures and permeabilities. A typical anisotropic membrane has a relatively dense top layer, which is supported on a more open, porous bottom layer. According to the invention, the more open side of said membrane is preferably on the side along which the food product flows. The microfiltration wall may in itself be manufactured from different materials as long as its surface has the required static contact angle with water. In a preferred embodiment, a microfiltration wall is used which is coated with a hydrophobic layer. Due to this hydrophobic layer, the surface of said microfiltration wall has the required contact angle with water of 110° or more (measured as described in detail above). The hydrophobic layer is preferably applied onto a support material, which is preferably selected from the group consisting of glass, metal, rubber, polymer and ceramic. Said hydrophobic layer preferably has a mean thickness of between 20 and 300 nm, more preferably between 20 and 100 nm, and most preferably between 20 and 50 nm. The mean thickness of the microfiltration wall as a whole, i.e. the mean thickness of the wall including the hydrophobic layer, is preferably between 450 and 900 $\mu$m, more preferably between 450 and 750 $\mu$m and

most preferably between 450 and 550 $\mu$m, measured using Scanning Electron Microscopy (SEM). The hydrophobic layer preferably includes or consists of a material having a fluoro-carbon backbone structure such as hepta-deca-fluorodecyl-acrylate or hexa-fluoro-propylene.

Preferably, the microfiltration wall according to the present invention is a hollow fiber membrane, coated with a hydrophobic layer as specified above.

The hydrophobic layer can be applied to the microfiltration wall via any of the methods available in the art, for example as described in N.F. Himma et al. "Advances in polypropylene-membrane preparation and applications", in J. Polym. Eng. 2016, 36(4), p.341-344 in particular. Preferably, it is applied via one or more of the techniques selected from the group consisting of plasma coating, vapour deposition, chemical vapour deposition, and immersion coating.

In the method according to the invention, a food product to be foamed is supplied to a microfiltration device which is provided with a microfiltration wall having gas transmissive pores. Said microfiltration wall separates a first space from a second space. The food product is passed through the first space, flowing along the microfiltration wall, and gas is supplied to the second space such that the gas can be injected via the microfiltration wall (in particular via transmissive pores comprised by this wall) into the food product and the food product undergoes, as a result of gas being injected therein, an overrun that is in the range of 120-450%. As the skilled person will understand, the method can also be carried out *vice versa,* meaning that the space through which the food product is passed can also be the second space, and the space to which gas is supplied can be the first space. The respective spaces can also be denoted as product feed-through space (a space for feeding-through the product) and gas supply space. Supply of product to the product feed-through space can be carried out by suitable fluid supply means, and supply of gas to the second space can be carried out by suitable gas supply means, which will be clear to the skilled person.

The method provided by the invention thus provides foamed food product very quickly and reliably, in a hygienic manner. The method can be utilized on a small or, conversely, on a large scale. The foamed food product formed by the invention can moreover provide a particularly pleasant taste sensation if the product is intended for consumption.

As the skilled person will understand, the microfiltration device can be designed in various ways. Typically, the microfiltration wall, which separates the first space from the second space, is sufficiently rigid. More particularly, the microfiltration wall is so rigid that the wall does hardly or even not at all deform under the influence of any pressure difference that may prevail between the first and second space during use, for instance, a pressure difference of more than 1 bar or a smaller pressure difference (the pressures mentioned in this application are absolute pressures). The microfiltration device may comprise a single microfiltration wall, or may comprise two or more microfiltration walls in parallel.

The microfiltration wall of the present invention may be, for instance, cylindrical, for instance, having a circular cross section. According to a further elaboration, a length of the wall (in particular of the space where the food product is passed through, flowing along the microfiltration wall as described above, said space also denoted as the product feed-through channel) is at most 10 cm (i.e. 100 mm), in particular at most 5 cm (50 mm), more particular at most 2 cm (20 mm), and at least 0.4 cm (4 mm), more particularly at least 0.5 cm (5 mm). The length mentioned is, for instance, in the range of approximately 5-50 mm. In a relatively compact design, this length L is less than 35 mm, e.g. a length of approximately 5, 10, 20, 30 or 35 mm. Particularly preferred is a length of 18-33 mm.

The gas used according to the present invention can comprise one or more gasses, preferably the gas is selected from the group consisting of nitrogen, nitrogen oxide, carbon dioxide, and air. Most preferably, the gas is air. The temperature of the gas (or gas mixture) to be supplied to the filtration device can be, for instance, an ambient temperature, for instance, room temperature. The gas temperature can be, for instance, in the range of 0-50°C, or another temperature, for instance, a temperature higher than 50°C or, conversely, a temperature of 0°C, or lower than 0°C.

The volume increase of a food product after foaming is typically denoted with the term "overrun percentage" or simply "overrun". The overrun gives the volume increase of a product P after foaming with respect to the volume of the non-foamed product and can be represented as:

$$\text{Overrun} = ((W_p - W_s) / W_s) \quad \times \quad 100\%$$

Wherein $W_p$ represents the mass of a fixed volume of unfoamed product and $W_s$ the mass of the same volume of foamed product. Thus, an overrun percentage of 100% means that a volume of 100 ml after dispensing has increased to 200 ml.

With the method according to the present invention, the desired overrun (degree of aeration) can be obtained for the food product, with the quality being of high consistency. With various foamable food products, a particularly high overrun (degree of aeration) can be obtained. The overrun typically is at least 120%. In case of a cream product, an overrun of between 135 and 450%, more preferably between 150 and 400% is particularly preferred.

The food product to be foamed and dispensed in accordance with the present invention may be, for instance, cream, spray cream, (fruit) juice/drink, an alcohol-containing drink or drink base, for instance, beer or wine, a dairy or dairy-based drink, for instance, a whey drink or permeate-based drink, a plant-based drink (e.g. an oat, soy, coconut, or almond based drink), a (milk) shake, chocolate drink, (drinking) yoghurt, sauce, ice cream or dessert. Preferably, in the present invention, upstream of the filtration device no prefoam is utilized, at least: a product in itself not yet foamed (i.e., a product in substantially non-foamed condition) is supplied to the microfiltration device.

The food product downstream of the microfiltration device may undergo:

- a mixing treatment; and/or
- a controlled pressure reduction.

More particularly, in some embodiments, it is advantageous when, downstream of the microfiltration device, the product undergoes a controlled pressure decrease. This is particularly advantageous in case of liquids which have a higher viscosity than milk, e.g. cream, and whereby preferably operating pressures of at least 4 bar are applied. Here, the pressure of the product can in particular be gradually brought from a first pressure value to a second pressure value, with the first pressure value being higher than the second pressure value (a pressure difference between the first and second pressure may be at least 1 bar, or a smaller pressure difference). The first pressure can for instance be super atmospheric. The second pressure can for instance be substantially atmospheric pressure. The pressure decrease can be effected by for instance a product processing device suitable to that end (i.e. a pressure reducer, pressure decreasing device). The processing device can be configured for, for instance, applying shear to the flowing product for the purpose of decreasing the pressure. As a gradual pressure decrease is applied, whereby in a controlled manner shear is applied to the product, separation of the product can be well prevented or limited.

It appears that good results are obtained if the product undergoes a mixing treatment downstream of the microfiltration device, in particular for obtaining a homogeneous foamed product. Here, it is especially advantageous when the mixing treatment is performed by a static mixing device. The mixing device can for instance be a product processing device, and appears to be able to effect a pressure decrease and shear on the product in a simple manner.

In some cases, it may be advantageous to supply gas via a microfiltration device to the product, without utilizing a downstream (relative to the microfiltration device) mixing treatment and/or a controlled pressure reduction. In such an embodiment, the food product may undergo a mixing treatment upstream of the microfiltration device.

According to a further elaboration of the invention, the gas can be brought via the microfiltration device into the product under the influence of an (absolute) pressure of more than 1.2 bar, for instance a pressure in the range of more than 5 bar, in particular a pressure higher than 7 bar, for instance a pressure in the range of 8 - 15 bar.

The method can comprise, e.g., use of a product flow rate and gas flow rate, with a ratio of product flow rate to gas flow rate of 10:1 - 1:10. A flow rate of the gas may be, for instance, greater than 10 liters per hour, and may be, for instance, in the range of approximately 30-600 liter/hour (for instance, 50-300 liter/hour and more particularly 100-300 liter/hour), or have a different value. The gas flow rate may be, for instance, at least 7.7 liter/hour and at most 20.3 liter/hour.

In a further aspect, the invention relates to a foamed food product dispensing system, configured for carrying out the method of the present invention, wherein the system is provided with a holder which contains a food product to be dispensed, and product discharge means for discharging the food product coming from the holder, wherein the product discharge means are provided with a microfiltration device which is provided with a product entrance for supply of product, wherein the microfiltration device is connectable to a fluid supply for supplying gas to the product during product discharge, wherein the product discharge means are preferably further provided with a processing device which is arranged downstream of said microfiltration device for performing a mixing treatment and/or pressure reduction treatment on the food product provided with gas, wherein the microfiltration device is provided with a microfiltration wall having gas transmissive pores which separates a gas supply space associated with the fluid supply from a product feed-through channel associated with the product entrance, characterized in that the surface of the microfiltration wall on the side of the product feed-through channel is hydrophobic, said surface having a contact angle with water of 110° or more, and wherein said microfiltration wall has a porosity of between 60% and 90%.

In this manner, the above-mentioned advantages can be obtained.

As the skilled person understands, the preferred embodiments set out above in detail for the method according to the present invention apply mutatis mutandis to the foamed food product dispensing system of the invention.

The foamed food product dispensing system may be provided with a product processing device, for instance a mixing device, in particular a static mixer, which product processing device is in that case disposed downstream of the microfiltration device. The product processing device can perform a mixing treatment for mixing the foamed food product, and/or have the foamed food product undergo a controlled pressure decrease, in particular for generating a homogeneously foamed food product.

The foamed food product dispensing system according to the invention is simple in use, relatively rapid, relatively reliable and robust (has preferably no moving parts), is easily cleanable and hygienic, while maintaining quality. Additionally, the system can be scaled well; the system can be of relatively small design (for instance with a microfiltration device whose largest dimension, for instance length, is smaller than 35 mm) or, conversely, of relatively large design (for instance with a microfiltration device whose largest dimension, for instance length, is 10-20 cm).

A product processing device mentioned (for instance a static mixing device) can be designed in various manners. According to a further elaboration, this product processing device is designed for agitating product (provided with gas bubbles) flowing through this device and/or changing the course thereof (i.e. accelerating it, while the direction of the product velocity vector preferably changes a great many times). The product processing device is in particular not provided with moving parts, and can mix the product in a passive manner.

A product processing device mentioned (for instance static mixing device) can for instance be designed for holding substantially static obstructions (for instance substantially round obstructions, balls, marbles, flow velocity influencing walls or the like) in a flow path of the product, for treating the product (and in particular having it travel one or more non-straight paths through the product processing device).

The product provided with gas bubbles can for instance be thrust through/along the product processing device under the influence of a fluid pressure suitable thereto (in particular a super atmospheric pressure). This fluid pressure is preferably also utilized for supplying the product to (and in particular through) the microfiltration device.

A static mixing device mentioned can be designed in different manners, and for instance comprise a helical, cube-shaped or rhomboid mixer (provided with helical, cube-shaped or rhomboid product mixing walls), and/or be pro-vided with through-flow space containing obstructions. The mixing device can for instance comprise a dispersive or distributive mixing device. It will be clear that the mixing device can also be designed differently.

In a further aspect, the invention relates to the use of a specific microfiltration wall in the microfiltration device of a foamed food product dispensing system configured for carrying out the method of the present invention, in order to extend operating lifetime of said microfiltration device and/or to diminish fluctuations in foaming performance (i.e. have a more constant foaming performance). More particularly, the invention relates to the use of a microfiltration wall in a foamed food product dispensing system comprising a microfiltration device, said dispensing system being configured for carrying out the method of the present invention, wherein the surface of said microfiltration wall which is in contact with the food product is hydrophobic, meaning that the surface has a contact angle with water larger than 110°, and wherein said microfiltration wall has a porosity of between 60% and 90%, in order to extend operating lifetime of said microfiltration device and/or to diminish fluctuations in foaming performance.

Further elaborations of the invention are described in the subclaims. Presently, the invention will be clarified on the basis of an exemplary embodiment and the drawing. In the drawing:

Fig. 1 shows a schematic view of a system according to a first exemplary embodiment of the invention;

Fig. 2 schematically shows an example of a microfiltration device;

Fig. 3 shows a schematic, exploded side view of an assembled system according to a second exemplary embodiment of the invention;

Fig. 4 shows a view similar to Fig. 3 of the operating device, in an opened position;

Fig. 5 shows a view similar to Fig. 3 of the product holder;

Fig. 6 shows an alternative elaboration of the product holder.

A non-limiting, exemplary, embodiment

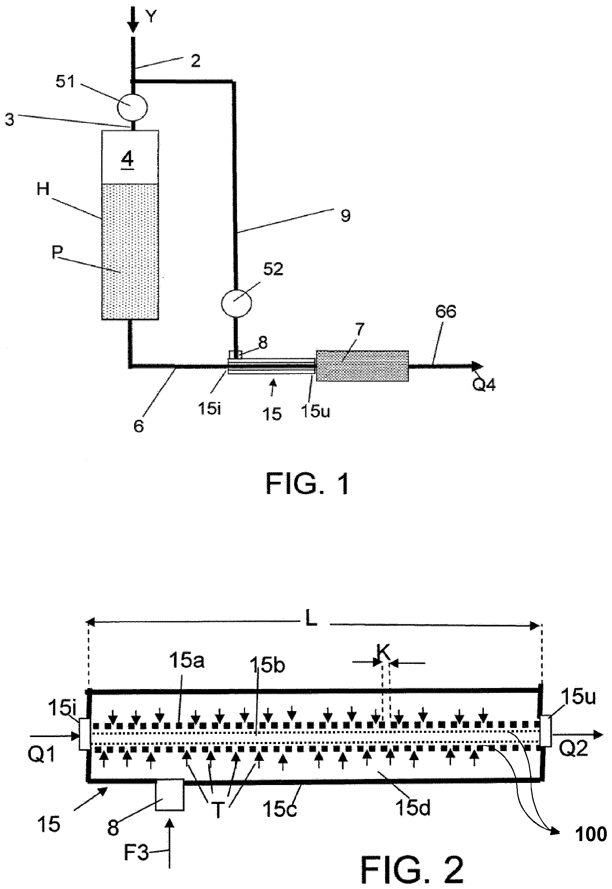

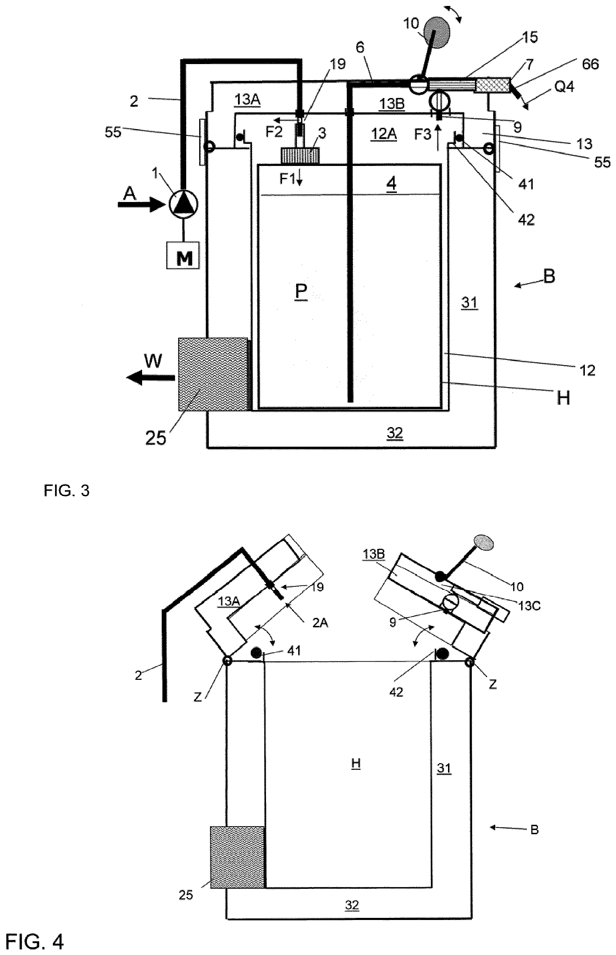

Fig. 1 schematically shows an example of a product dispensing system, comprising a holder H which contains a product P to be dispensed, and product discharge means (for instance, provided with a product discharge channel) for discharging product P coming from the holder H. The system shown in Fig. 1 may be utilized, for instance, in an assembly as represented in Figs. 3-5, or otherwise.

The holder H can be designed and formed in different manners. For instance, an outer wall of the holder H can be manufactured from, for instance, metal, an alloy, plastic, or the like. The outer wall can be of rigid or flexible design. The holder H may be, for instance, of cylindrical or angular design, or of different design. The holder H can be designed, for instance, to withstand a maximum internal pressure of 12 bar, in particular 10 bar, for instance, if the holder H is provided with a propellant (see hereinbelow). According to an advantageous embodiment, the holder H is designed to withstand a considerably lower maximum pressure, for instance, at most 2 bar, so that the holder can be of relatively light (and, for instance, relatively simple, inexpensive) design.

According to an advantageous elaboration, the food product P present in the holder is a foamable food product selected from the group consisting of cream, spray cream, (fruit) juice/drink, an alcohol-containing drink or drink base, for instance, beer or wine, a dairy or dairy-based drink, for instance, a whey drink or permeate-based drink, (milk) shake, chocolate drink, (drinking) yoghurt, sauce, ice cream, dessert, and juice. As shown in Fig. 1, the product discharge means 6 are advantageously provided with a microfiltration device 15, which is, for instance, connectable (via a gas inlet 8) to a fluid supply 9 for supplying gas to the product during product discharge. The microfiltration device 15 is furthermore provided with a product entrance 15i for receiving (not yet foamed) food product P (for instance, a product P not yet containing gas) coming from the holder H and discharge 6. The system shown in Fig. 1 can further be provided with, for instance, regulating means 51, 52, for instance, one or more operating valves, operating buttons and/or the like, for regulating gas supply and/or gas pressure, which will be clear to the skilled person. Operable valve means may be provided, for instance, for regulating gas supply (or gas pressure) to the holder H. Operable valve means may be provided, for instance, for regulating gas supply (or gas pressure) to the microfiltration device 15. Preferably, the product discharge means 6 are further provided with an optional product processing device, in this example comprising a mixing device 7 disposed downstream of the microfiltration device 15 for performing a mixing treatment on the product provided with gas. More particularly, the mixing device is a static mixer 7. The product processing device can also be designed otherwise. Preferably, this device is designed to enable controlled (in particular, gradual) reduction of the excess pressure of the product from, for instance, a superatmospheric pressure to a lower, substantially atmospheric pressure.

Fig. 2 shows a further, non-limiting elaboration of the filtration device 15 in more detail. The microfiltration device 15 is provided, for instance, with a (substantially closed) housing 15c comprising a product entrance 15i for supply of food product P, a gas inlet 8 for supply of gas, and an exit 15u for discharge of product provided with gas. The gas inlet 8 terminates, for instance, in a gas receiving space 15d (i.e., a second space 15d) which is separated from the product entrance 15i and exit 15u by means of a rigid (in particular, not flexible) microfiltration wall 15a (provided with gas transmissive pores). Furthermore, the wall 15a separates the gas supply space 15d from a product feed-through channel 15b (i.e., a first space 15b). The feed-through channel 15b extends between the product entrance 15i and product exit 15u (in the housing 15c) of the filtration device 15. Supply and discharge of product to/from the channel 15b is indicated with arrows Q1, Q2, respectively. As mentioned, the microfiltration device 15 can be designed in various manners. In particular, the microfiltration wall is preferably so rigid that the wall does not deform under the influence of a pressure difference prevailing, during use, between the product feed-through space 15b and gas supply space 15d, for instance, a pressure difference of more than 1 bar. In the exemplary embodiment, the product feed-through channel 15b is in the microfiltration wall 15a (at least, is surrounded by that wall) and the gas supply space 15d is outside thereof. Alternatively, the product feed-through channel 15 is outside the microfiltration wall 15a, while the gas supply space 15d is formed by the space surrounded by this wall 15a. The microfiltration wall 15a is, for instance, cylindrical, tubular, with, for instance, a circular cross section, comprising hydrophobic layer 100.

According to a further elaboration, a length L of the wall 15a (in particular, of the channel 15b) is at most 100 mm, preferably at most 50 mm, most preferably at most 35 mm. This length L is, for instance, in the range of approximately 4-50 mm (a minimum length is, for instance, approximately 0.5 cm). In a relatively compact design, this length L is less than 35 mm, for instance, a length of approximately 5, 10, 20, 30, or 35 mm. The length L is, in particular, the length of the wall 15a measured in a product flow direction of product during use flowing along this wall (parallel to this wall 15a), from the product entrance 15i to the product exit 15u. The filtration device 15 (for instance, microfiltration wall 15a) can also be dimensioned and shaped differently, for instance, flat, curved, conical, angular, straight, convex viewed from the first space, concave viewed from the first space, and/or a combination of these or other shapes. A morphology of the wall 15a may be, for instance, homogeneous, sintered, cylindrically porous or spongy porous, built up asymmetrically, built up from several different layers, may comprise a combination of these configurations or be designed in a different manner. The microfiltration wall 15a may in itself be manufactured from different materials, for instance, ceramic material, metal, plastic, polypropylene, polyolefin, a blend, an alloy or the like. The microfiltration wall 15a is preferably provided with relatively narrow air transmissive pores (for instance, air transmissive outflow channels, injection channels, with gas outflow ends that terminate in the feed-through channel 15b), in particular having a mean pore size K with characteristics as described above.

A mean wall thickness of the microfiltration wall 15a as a whole can be, for instance, preferably between 450 and 900 $\mu$m, more preferably between 450 and 750 $\mu$m and most preferably between 450 and 550 $\mu$m. When the microfiltration wall 15a comprises a hydrophobic layer, said layer preferably has a mean thickness of between 20 and 300 nm, more preferably between 20 and 100 nm, and most preferably between 20 and 50 nm. According to a non-limiting example, if the device 15 is tubular, a tube outer diameter of this filtration device 15 can be, for instance, smaller than 10 cm, for instance, smaller than 1 cm.

Preferably, the microfiltration wall 15a is, preferably concentrically, arranged in a hollow housing 15c of the filtration device 15, and coated with hydrophobic layer 100 (see Fig. 2), which housing is provided with the gas inlet 8. Between an inside of the housing 15c and an outside of the (in this case) tubular microfiltration wall 15a is the inters pace 15d for collecting air supplied via inlet 8. During use, the air present in the interspace 15d preferably has a pressure higher than 1.2 bar, in particular higher than 5 bar, more particularly a pressure higher than 7, for instance a pressure in the range of 8-15 bar. The pressure of product present during use in the flow-through space 15b is, in particular, lower than the pressure in the interspace 15d (for instance, at least 1 bar lower, or a lower pressure difference, for instance, a pressure difference greater than 0 bar and less than 1 bar), such that air present in the interspace 15d enters the product uniformly via the pores (which is indicated with arrows T). In this manner, fine air bubbles can be homogeneously introduced into the product P, for the purpose of foam formation.

Static mixer 7 can be designed in different manners. The static mixer is, in particular, not provided with moving parts, this in contrast to, for instance, a disperser provided with moving parts, such as a turrax or rotor-stator mixer.

In particular, the system is provided with or is connectable to a gas supply for supplying gas under super atmospheric pressure to the microfiltration device 15, and preferably also to the holder H. Gas supply to the system is indicated in Fig. 1 with an arrow Y. Pumping means (for instance, with a compressor) and/or a gas reservoir brought to excess pressure (for instance, a gas cylinder) may be provided, for instance, to effect gas supply. The system can comprise, for instance, regulating means 51, 52 for regulating flow rates and/or pressure of gas to be supplied to the holder H and filtration device 15. The supply comprises, for instance, a supply line system 2, provided with a line part that, during use, is connected to a suitable gas inlet 3 of the holder H, and a line part that, during use, is connected to a filtration device 15, for supplying gas thereto. The gas may comprise, for instance, one or more gases, a gas mixture, nitrogen, air or the like.

Optionally, the holder H is provided with a pressure release valve (not represented) for rendering a pressurized holder H pressure less.

The present exemplary embodiment is designed to supply the same gas to the holder H and filtration device 15. Alternatively, gas supply means can be designed, for instance, to supply a first gas to the holder and a second gas, different from the first gas, to the filtration device 15. In addition, the system may for instance be designed in a different manner to effect product flow, for instance, by providing the system with pumping means to pump food product P from the holder H through the discharge.

Use of the system shown in Figs. 1-2 comprises, for instance, a method for dispensing the product P coming from the holder H (for instance, a substantially gasless product), with gas being supplied to the product P (flowing through the feed-through channel 15b) via the microfiltration device 15. In particular, microfiltration device 15 is operative to inject the gas into the product P supplied to that device.

Preferably, the product P which is supplied to the filtration device is not heated. The product may, for instance, be cooled (e.g., to a temperature that is lower than a holder ambient temperature), or have an ambient temperature.

In another example, the product P which is supplied to the filtration device is heated (for instance, to a temperature that is higher than the temperature at which the product has been stored, for instance, a cold store temperature or a temperature that is higher than a holder ambient temperature).

The temperature of the gas (or gas mixture) to be supplied to the filtration device can be, for instance, an ambient temperature, for instance, room temperature. The gas temperature can be, for instance, in the range of 0-50°C, or another temperature, for instance, a temperature higher than 50°C or, conversely, a temperature of 0°C, or lower than 0°C.

Here, the food product P, in itself preferably not yet foamed, is passed out of the holder H, for instance, under the influence of gas supplied via the supply 2, to be conducted via the discharge 6 through the filtration device 15 and then through the mixer 7. Here, the product is passed, in particular, through the tube inner space (i.e., feed-through channel) 15b of the microfiltration device 15 (with the product flowing along the filtration wall 15a), while gas from the gas supply space 15d is injected via the microfiltration wall 15a (at least, through the wall) into the product for the purpose of bubble formation in the product (to that end, the gas is supplied from the gas supply space 15d to the pores). A pressure prevailing in the gas supply space 15d is, for instance, higher than a pressure of the product P flowing along the filtration wall 15a. A flow rate of the product flowing through the filter 15 can be, for instance, higher than 10 liter/hour, and be in the range of, for instance, approximately 30-600 liter/hour (for instance, 50-300 liter/hour), or another range as disclosed above.

Good results are obtained if the gas is introduced via the filtration device 15 into the food product P under the influence of a pressure of more than 2 bar, for instance, a pressure in the range of higher than 5 bar, in particular a pressure higher than 7 or 8 bar, for instance, a pressure in the range of approximately 8 - 15 bar. A flow rate of the gas may be, for instance, greater than 10 liters per hour, and may be, for instance, in the range of approximately 30-600 liter/hour (for instance, 50-300 liter/hour and more particularly 100-300 liter/hour), or have a different value. The ratio of product flow rate to gas flow rate can be, for instance, in the range of 10:1 - 1:10.

Thereupon (i.e., downstream of the microfiltration device 15) the food product P undergoes a mixing treatment, which is performed by the static mixing device 7. It has been found that the food product coming from the mixer 7 (product outflow via an optional outflow line 66 is indicated in Fig. 1 with arrow Q4) can contain a particularly durable, stable foam, which may, for instance, be foamed particularly homogeneously if the product in itself is a foamable product. Moreover, the system can be made of particularly compact, durable and relatively simple design to obtain such a result.

The present invention is further exemplified by the following, non-limiting, Examples:

Examples

*Figures:*

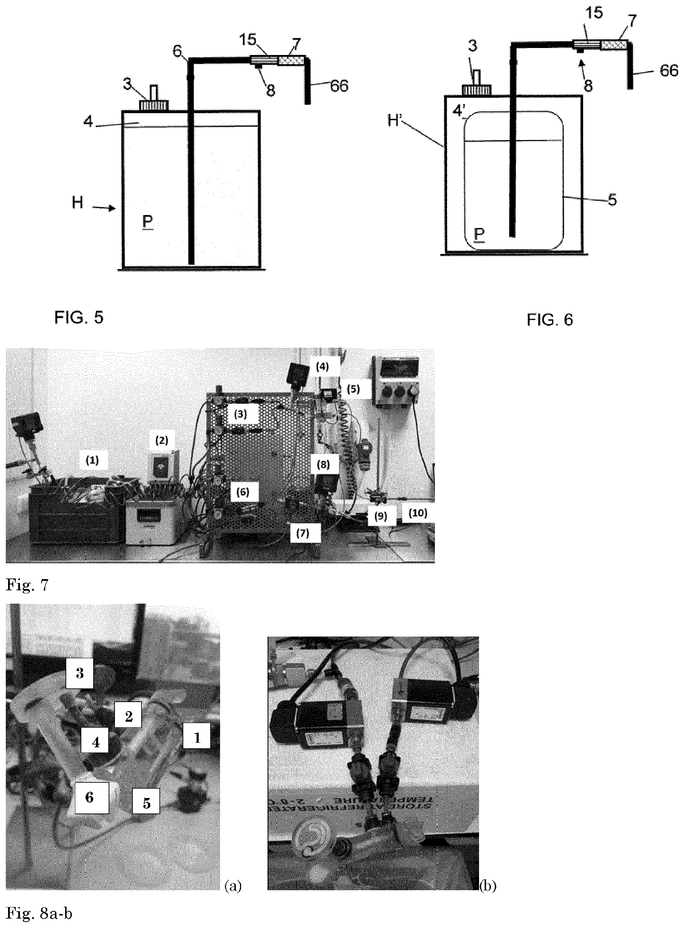

Fig. 7 shows the Experimental setup of the membrane foaming line used in the Examples, with (1) feed tank and water bath, (2) heating unit, (3) air lines, (4) pressure transmitter for air, (5) air flow meter, (6) feed lines (7) feed flow meter, (8) pressure transmitter for feed, (9) membrane holder, (10) split junction;
Fig. 8a shows a foaming chamber with: 1) SLA (stereolithography) printed dual membrane module containing 2 parallel membranes with effective length of 15 mm - each membrane module has an internal diameter of 4 mm, 2) a connection tube with a length of 40 mm and with inner diameter of 2.5 mm, 3) SLA printed labyrinth of 12 cm, 4) outlet tube of 40 mm, 5) tulip, 6) cream inlet restriction of 1.5 mm diameter;
Fig. 8b shows a foaming chamber with two parallel membranes, independently supplied by feed and air;

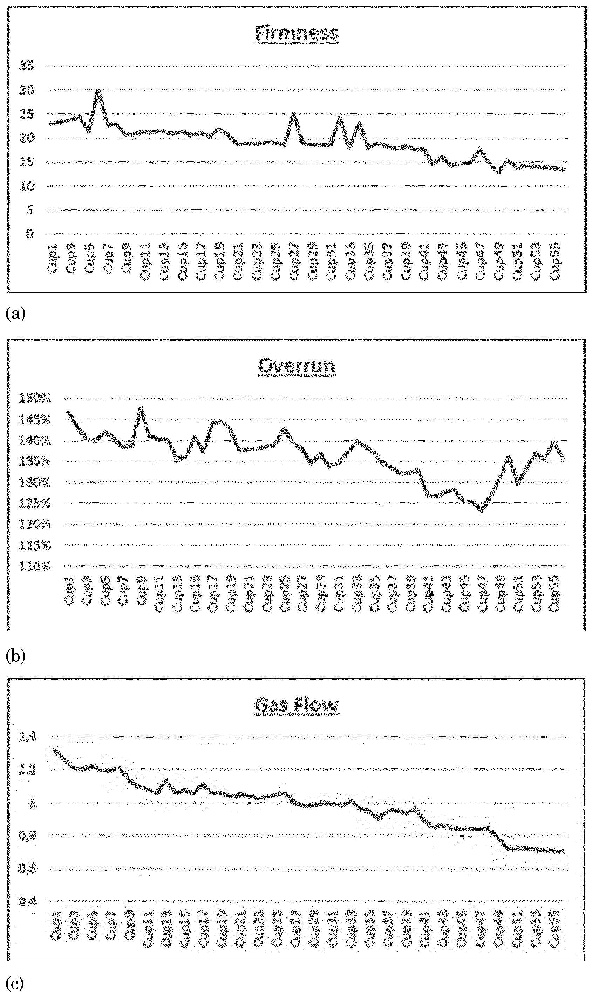

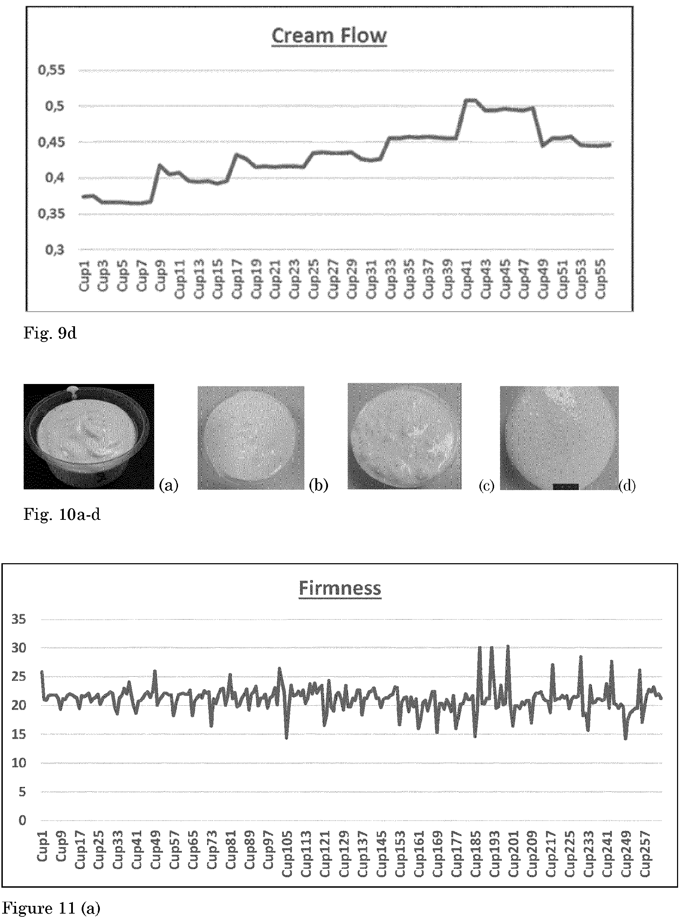

Fig. 9a-d: Standard feed under standard process parameter settings, standard uncoated HF membranes - foam properties (overrun [%], firmness), process parameters (gas flow [L/min], cream flow [ml/min]);
Fig. 10a-d: Photos of toppings as a function of number of servings, with the first serving being depicted in Fig. 10a; Photo of Fig. 10b is taken after 16 servings; Photo of Fig. 10c is taken after 32 servings; and Photo of Fig. 10d is taken after 55 servings.
Fig. 11a-d: Standard feed under standard process parameter settings with a plasma-coated (Nanofics® 120) HF membrane - foam properties (firmness, overrun [%]), process parameters (gas flow [L/min], cream flow [ml/min]) as a function of number of servings (= time).

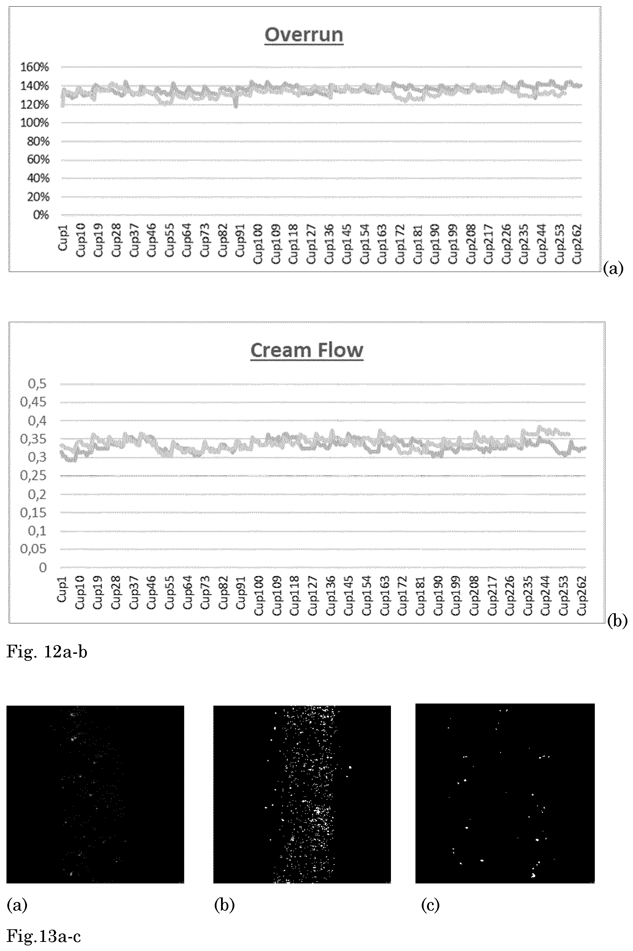

Fig. 12a-b: Standard feed under standard process parameter settings with two plasma-coated C3F6 HF membranes (25 nm = light coloured line; 50 nm = dark coloured line); Overrun [%]) and cream flow [ml/min]) are depicted as a function of number of servings.
Fig. 13a-c show CSLM images of the outer skin of unused uncoated HF (HF = hollow fiber) membrane (Fig.13(a)) and membranes used in cream application, uncoated (Fig.13(b)) and coated (Fig.13(c)), respectively.
Figure 14: Fluorescence intensity of unfouled and fouled membranes stained with FITC (protein) and NR (fat): (1) unused uncoated HF, (2) uncoated HF used with cream, (3) unused coated HF, (4) coated HF used with cream. (Dye reagent FITC is fluorescein isothiocyanate; dye reagent NR is "neutral red", a standard eurhodin dye).

Test set-up:

Experiments were performed on a lab-line as shown in Fig 7. The solution to be foamed was placed in a pressure tank (10 L), which was placed in a bucket with thermostatted water (ice water for experiments with creams). Then, the tank was pressurized using air pressure from the internal gas system. Feed was supplied to the foaming module via 2 parallel feedlines, including flow meters and pressure meters upstream of the foaming module. Air was supplied to the foaming module via 2 parallel airlines using air from the internal gas system, whereas the airlines included flow meter and pressure meter upstream of the foaming module. The air had an estimated humidity of < 5%).
The foaming chamber (as depicted in Figure 8a) contained two parallel membranes; the two membranes were supplied by feed and air independently (see Figure 8b), whereas the foam leaving the dual membrane module merged into one connection tube followed by an outlet geometry or labyrinth with accompanying elements to shear and structure the cream foam.

Standard feed:

The feed solution contained 28 wt% fat (27 wt% milk fat + 1 wt% vegetable fat, which is an approx. 1:1:1 mixture of sunflower oil, rapeseed oil, and palm oil). It had a protein content of 2.1 wt%, a dry matter content of 41 w%. The feed was characterized by a viscosity of 150 mPa.s, a pH of 6.55, and a density of 1.0335 g/ml. The viscosity was measured using a Brookfield viscometer with a spindle 62 at 30 rpm, at 4-5°C.

Comparative Example 1

In a first experiment, the foaming chamber of the lab line was equipped with uncoated HF (HF = hollow fiber) membranes. Said HF membranes were polypropylene membranes ex 3M, MF-PP Series, Type S6/2 (see https://multimedia.3m.com/mws/media/1673837O/3m-capillary-membrane-mf-pp-series-type-s6-2-data-sheet.pdf) having a contact angle with water (measured after immersion in water at 20°C for 3 days as described above) of 97°, and a porosity (determined as described in the specification above) of 69.7%. The KPI's on foam properties (firmness, overrun [%]) and process parameters (gas flow [L min$^{-1}$], cream flow [ml/min]) were monitored as a function of servings (= time) while serving an entire BiB (Bag in Box). The test rig was steered towards a setpoint of 140 ± 20 % overrun with the overall pressure on the vessel fixed at 2.5 bar. The thus obtained graphs (see figures 9a-d) showed a steady decrease in gas flow (from 1.3 to 0.7 L min$^{-1}$) coupled with an increase in cream flow (from 0.36 to 0.50-0.45 mL min$^{-1}$), while both overrun and firmness decreased as a function of servings. Overrun decreased as less air is injected and firmness decreased as the shear decreased when less air was injected. In addition, large bubbles started to appear in the foam after 16-32 servings (i.e. after 2-4 hours) which is unacceptable - also the low overrun and firmness (values under the minimum threshold value of 120 % and 15 respectively) contributed to the overall rejection of the cream toppings (see Fig.10a-d).

Example 2:

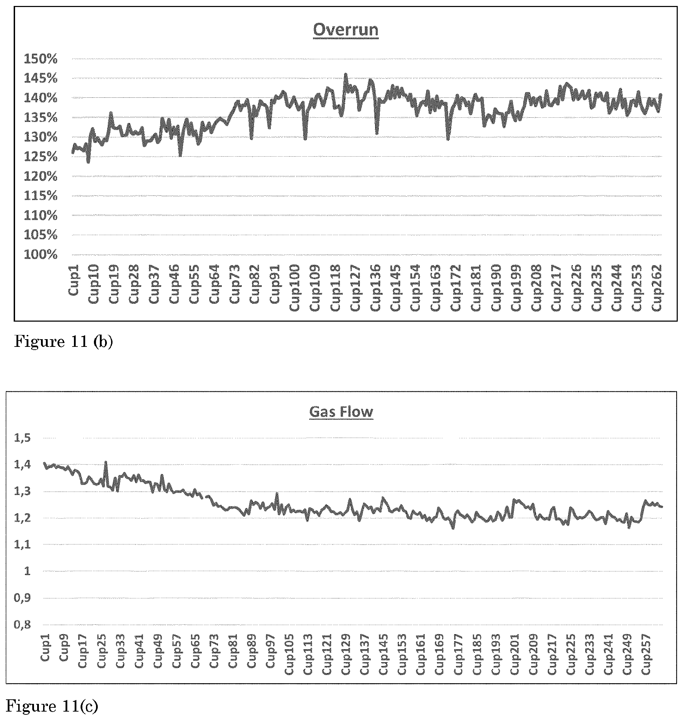

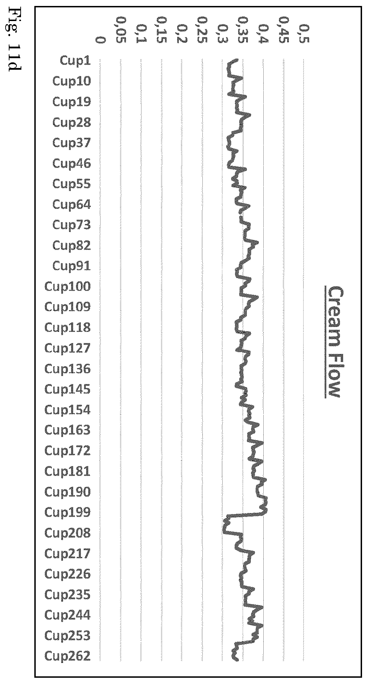

The same standard HF membranes as used in Comparative Example 1 were first plasma-coated with hepta-deca-fluorodecyl-acrylate (Nanofics® 120) with a coating layer thickness of 150 nm and 300 nm respectively. The thus coated HF membranes had a contact angle with water (measured after immersion in water at 20°C for 3 days as described above) of 120° and a porosity (determined as described in the specification above) of 69.7%. The membranes were subsequently tested in the lab line with a standard feed under standard parameter settings (i.e. the test rig was steered towards a setpoint of 140 $\pm$ 20 % overrun with the overall pressure on the vessel fixed at 2.5 bar). The process performance improved considerably compared to comparative example 1, i.e., no significant changes in product quality were observed (overrun stabilized at 140%, firmness was more or less constant at 20), even after 7 days (cfr. Figure 11). Although the gas flow initially tended to decline (from 1.4 to 1.2 L min$^{-1}$) it leveled off and stabilized at a fixed flow of 1.2 L min$^{-1}$.
Similar results were obtained with both coating layer thicknesses.

Example 3:

The same standard HF membranes as used in Comparative Example 1 were first plasma-coated with another hydrophobic coating compared to the ones tested in Example 2; i.e. 3-hexafluoropropylene (C3F6) was used as coating instead of Nanofics® 120; the coating thickness was 25 and 50 nm respectively. The thus coated HF membranes had a contact angle with water (measured after immersion in water at 20°C for 3 days as described above) of more than 120° and a porosity (determined as described in the specification above) of 69.7%. The coated membranes were subsequently tested in the lab line with a standard feed and under standard parameter settings (i.e. process is steered towards a setpoint of 140 $\pm$ 20 % overrun with the overall pressure on the vessel fixed at 2.5 bar). Constant values for overrun and cream flow were observed (cfr. figure 12). Similar observations were made with different coating layer thicknesses.

Example 4:

In order to understand the differences in behavior between coated and uncoated membranes in terms of protein and fat adsorption, the feed components involved in the adsorption process were identified by analysis of several membranes with Confocal Laser Scanning Microscopy (CLSM) (i.e. unused and used membranes, coated and uncoated HF membranes). For this experiment, the same HF PP membranes were used as described in Comparative Example 1. As coated HF membrane, the same membrane was used as described in Example 3. Figure 13a-c shows CSLM images of the outer skin of the unused uncoated HF membrane compared to the uncoated and coated membrane that has been used in the cream application. Membranes were stained with 0.1% FITC, 5 X magnification. Images are shown using the same settings, hence, the intensity is a measure of the protein concentration, allowing proper comparison of the degree of adsorption onto the surface. More particularly, the images are shown in such a way that the intensity of observed stain is proportional to the protein content. The unused membrane shows some protein spots, possibly due to the handling of the membranes or objective glass. The uncoated membrane used in the cream application shows an increased intensity, indicating much protein adsorption on the membrane surface. The used coated membrane shows only a slight increase in protein staining, indicating that the coating reduces protein adsorption.
Figure 14 shows the fluorescence intensities of the unused PP membranes (coated and uncoated), and the membranes after being used in cream applications. The unused membranes are the benchmark and showed hardly any color intensity, as expected. The uncoated cream fouled membrane showed the highest protein loading, whereas the coated cream membrane showed significantly lower protein loading, but comparable fat content. CLSM samples reveal that all used samples show significant adherence of fat. The coated membranes show lower protein load compared to the uncoated membranes. The different behavior of coated and uncoated membranes is according to CLSM analysis attributed to difference in protein load. In other words, proteins attached to the membrane surface seem to be the main differentiating factor in the coated and uncoated HF membranes in reducing membrane operating lifetime and creating fluctuations in foaming performance.

**Claims**

1. A method for dispensing a foamed food product, **characterized in that**

- a food product (P) is supplied to a microfiltration device (15) provided with a microfiltration wall (15a) having gas transmissive pores which separates a first space (15b) from a second space (15d),
- wherein the food product (P) is passed through the first space (15b), flowing along the microfiltration wall (15a), and gas is supplied to the second space (15d), or vice versa, such that the gas can be injected via the microfiltration wall into the food product,
- wherein the food product undergoes an overrun that is in the range of 120-450%, and
- wherein the surface of the microfiltration wall (15a) on the side along which the food product flows is hydrophobic, said surface having a contact angle with water of 110° or more, and
- wherein the microfiltration wall (15a) has a porosity of between 60% and 90%.

2. A method according to claim 1, wherein the food product (P) undergoes a mixing treatment and/or undergoes a controlled pressure reduction downstream of the microfiltration device (15).

3. A method according to claim 1, wherein the food product (P) undergoes a mixing treatment upstream of the microfiltration device (15).

4. A method according to any one of the preceding claims, wherein the microfiltration wall (15a) is a microfiltration wall having an asymmetric structure and a mean pore size range of 0.1 - 5 micron, wherein the more open side of said membrane is preferably on the side along which the food product flows.

5. A method according to any one of the preceding claims, wherein the microfiltration wall (15a) is a hollow fiber membrane coated with a hydrophobic layer (100), such that the surface has a contact angle with water of 110° or more, said microfiltration wall (15a) preferably comprising a support material selected from the group consisting of glass, metal, rubber, polymer and ceramic.

6. A method according to claim 5 wherein the hydrophobic layer (100) has a mean thickness of between 20 and 300 nm, and wherein preferably the microfiltration wall (15a) together with the hydrophobic layer (100) has a mean thickness of between 450 and 900 $\mu$m.

7. A method according to claim 5 or 6 wherein the hydrophobic layer (100) includes or consists of a material having a fluoro-carbon backbone structure such as hepta-deca-fluorodecyl-acrylate or hexa-fluoro-propylene.

8. A method according to any one of claims 5-7, wherein the hydrophobic layer (100) has been applied to the membrane via one or more of the techniques selected from the group consisting of plasma coating, vapour deposition, chemical vapour deposition, and immersion coating.

9. A foamed food product dispensing system, configured for carrying out a method according to any one of the preceding claims, wherein the system is provided with a holder (H) which contains a food product (P) to be dispensed, and product discharge means (6) for discharging the food product coming from the holder (H), wherein the product discharge means (6) are provided with a microfiltration device (15) which is provided with a product entrance (15i) for supply of product, wherein the microfiltration device (15) is connectable to a fluid supply (9) for supplying gas to the product during discharge of product, wherein the product discharge means (6) are preferably further provided with a processing device which is arranged downstream of said microfiltration device (15) for performing a mixing treatment and/or pressure reduction treatment on the food product provided with gas, wherein the microfiltration device (15) is provided with a microfiltration wall (15a) having gas transmissive pores which separates a gas supply space (15d) associated with the fluid supply from a product feed-through channel (15b) associated with the product entrance (15i), **characterized in that** the surface of the microfiltration wall (15a) on the side of the product feed-through channel (15b) is hydrophobic, said surface having a contact angle with water of 110° or more, and wherein said microfiltration wall has a porosity of between 60% and 90%.

10. The foamed food product dispensing system according to claim 9, wherein the length (L) of the microfiltration wall (15a) is at least 5 mm and at most 10 cm, preferably at least 18 mm and at most 35 mm.

11. The foamed food product dispensing system according to claim 9 or 10, wherein the microfiltration wall (15a) is a microfiltration wall having an asymmetric structure and a mean pore size of 0.1 - 5 micron, wherein the more open side of said membrane is preferably on the side along which the food product flows.

12. The foamed food product dispensing system according to any one of claims 9-11, wherein the microfiltration wall (15a) is a hollow fiber membrane coated with a hydrophobic layer (100), said microfiltration wall preferably comprising a support material selected from the group consisting of glass, metal, rubber, polymer and ceramic, and wherein the hydrophobic layer preferably includes or consists of a material having a fluoro-carbon backbone structure such as hepta-deca-fluorodecyl-acrylate or hexa-fluoro-propylene.

13. The foamed food product dispensing system according to any one of claims 9-12, provided with or connectable to a gas supply to supply gas under super atmospheric pressure to the microfiltration device (15).

14. Use of a microfiltration wall (15a) in a foamed food product dispensing system comprising a microfiltration device (15) which is configured for carrying out a method according to any one of the preceding claims, **characterized in that** the surface of said microfiltration wall (15a) which is in contact with the food product is hydrophobic, the surface having a contact angle with water of 110° or more, and wherein the microfiltration wall (15a) has a porosity of between 60% and 90%, in order to extend operating lifetime of said microfiltration device(15) and/or to diminish fluctuations in foaming performance.

**Patentansprüche**

1. Verfahren zum Ausgeben eines geschäumten Lebensmittelprodukts, **dadurch gekennzeichnet, dass**

- ein Lebensmittelprodukt (P) einer Mikrofiltrationsvorrichtung (15) zugeführt wird, die mit einer Mikrofiltrationswand (15a) mit gasdurchlässigen Poren versehen ist, die einen ersten Raum (15b) von einem zweiten Raum (15d) trennt,
- wobei das Lebensmittelprodukt (P) durch den ersten Raum (15b) geleitet wird, an der Mikrofiltrationswand (15a) entlang fließt, und Gas dem zweiten Raum (15d) zugeführt wird, oder umgekehrt, so dass das Gas über die Mikrofiltrationswand in das Lebensmittelprodukt injiziert werden kann,
- wobei das Lebensmittelprodukt einem Aufschlag unterzogen wird, der im Bereich von 120-450 % liegt, und
- wobei die Oberfläche der Mikrofiltrationswand (15a) auf der Seite, entlang der das Lebensmittelprodukt fließt, hydrophob ist, wobei die Oberfläche einen Kontaktwinkel mit Wasser von 110° oder mehr aufweist, und
- wobei die Mikrofiltrationswand (15a) eine Porosität zwischen 60 % und 90 % aufweist.

2. Verfahren nach Anspruch 1, wobei das Lebensmittelprodukt (P) einer Mischbehandlung unterzogen wird und/oder einer kontrollierten Druckreduktion stromabwärts der Mikrofiltrationsvorrichtung (15) unterzogen wird.

3. Verfahren nach Anspruch 1, wobei das Lebensmittelprodukt (P) stromaufwärts der Mikrofiltrationsvorrichtung (15) einer Mischbehandlung unterzogen wird.

4. Verfahren nach einem der vorhergehenden Ansprüche, wobei die Mikrofiltrationswand (15a) eine Mikrofiltrationswand mit einer asymmetrischen Struktur und einer mittleren Porengröße im Bereich von 0,1 - 5 Mikrometer ist, wobei sich die offenere Seite der Membran vorzugsweise auf der Seite befindet, entlang der das Lebensmittelprodukt fließt.

5. Verfahren nach einem der vorhergehenden Ansprüche, wobei die Mikrofiltrationswand (15a) eine Hohlfasermembran ist, die mit einer hydrophoben Schicht (100) beschichtet ist, so dass die Oberfläche einen Kontaktwinkel mit Wasser von 110° oder mehr aufweist, wobei die Mikrofiltrationswand (15a) vorzugsweise ein Trägermaterial ausgewählt aus der Gruppe bestehend aus Glas, Metall, Gummi, Polymer und Keramik umfasst.

6. Verfahren nach Anspruch 5, wobei die hydrophobe Schicht (100) eine mittlere Dicke zwischen 20 und 300 nm aufweist, und wobei vorzugsweise die Mikrofiltrationswand (15a) zusammen mit der hydrophoben Schicht (100) eine mittlere Dicke zwischen 450 und 900 μm aufweist.

7. Verfahren nach Anspruch 5 oder 6, wobei die hydrophobe Schicht (100) ein Material mit einer Fluor-Kohlenstoff-Grundgerüststruktur, wie Heptadecafluordecylacrylat oder Hexafluorpropylen, einschließt oder daraus besteht.

8. Verfahren nach einem der Ansprüche 5-7, wobei die hydrophobe Schicht (100) über eine oder mehrere der Techniken ausgewählt aus der Gruppe bestehend aus Plasmabeschichtung, Gasphasenabscheidung, chemischer Gasphasenabscheidung und Tauchbeschichtung auf die Membran aufgebracht wurde.

9. Ausgabesystem für geschäumtes Lebensmittelprodukte, das zur Durchführung eines Verfahrens nach einem der vorhergehenden Ansprüche ausgelegt ist, wobei das System mit einem Halter (H), der ein auszugebendes Lebensmittelprodukt (P) enthält, und Produktaustragungsmitteln (6) zum Austragen des von dem Halter (H) kommenden Lebensmittelprodukts versehen ist, wobei die Produktaustragungsmittel (6) mit einer Mikrofiltrationsvorrichtung (15) versehen sind, die mit einem Produkteinlass (15i) zum Zuführen von Produkt versehen ist, wobei die Mikrofiltrationsvorrichtung (15) mit einer Fluidzufuhr (9) zum Zuführen von Gas zu dem Produkt während des Austragens des Produkts verbindbar ist, wobei die Produktaustragungsmittel (6) vorzugsweise ferner mit einer Verarbeitungsvorrichtung versehen sind, die stromabwärts der Mikrofiltrationsvorrichtung (15) angeordnet ist, um eine Mischbehandlung und/oder Druckreduzierbehandlung an dem mit Gas versehenen Lebensmittelprodukt durchzuführen, wobei die Mikrofiltrationsvorrichtung (15) mit einer Mikrofiltrationswand (15a) versehen ist, die gasdurchlässige Poren aufweist, die einen Gaszufuhrraum (15d), der mit der Fluidzufuhr assoziiert ist, von einem Produktdurchführkanal (15b) trennt, der mit dem Produkteingang (15i) assoziiert ist, **dadurch gekennzeichnet, dass** die Oberfläche der Mikrofiltrationswand (15a) auf der Seite des Produktdurchführkanals (15b) hydrophob ist, wobei die Oberfläche einen Kontaktwinkel von 110° oder mehr aufweist, und wobei die Mikrofiltrationswand eine Porosität zwischen 60 % und 90 % aufweist.

10. Ausgabesystem für geschäumte Lebensmittelprodukte nach Anspruch 9, wobei die Länge (L) der Mikrofiltrationswand (15a) mindestens 5 mm und höchstens 10 cm, vorzugsweise mindestens 18 mm und höchstens 35 mm beträgt.

11. Ausgabesystem für geschäumte Lebensmittelprodukte nach Anspruch 9 oder 10, wobei die Mikrofiltrationswand (15a) eine Mikrofiltrationswand mit einer asymmetrischen Struktur und einer mittleren Porengröße von 0,1 - 5 Mikrometer ist, wobei die offenere Seite der Membran vorzugsweise auf der Seite liegt, entlang der das Lebensmittelprodukt fließt.

12. Ausgabesystem für geschäumte Lebensmittelprodukte nach einem der Ansprüche 9-11, wobei die Mikrofiltrationswand (15a) eine Hohlfasermembran ist, die mit einer hydrophoben Schicht (100) beschichtet ist, wobei die Mikrofiltrationswand vorzugsweise ein Trägermaterial ausgewählt aus der Gruppe bestehend aus Glas, Metall, Gummi, Polymer und Keramik umfasst, und wobei die hydrophobe Schicht vorzugsweise ein Material mit einer Fluor-Kohlenstoff-Grundgerüststruktur wie Heptadecafluordecylacrylat oder Hexafluorpropylen umfasst oder daraus besteht.

13. Ausgabesystem für geschäumte Lebensmittelprodukte nach einem der Ansprüche 9-12, das mit einer Gaszufuhr versehen oder mit dieser verbindbar ist, um der Mikrofiltrationsvorrichtung (15) Gas unter überatmosphärischem Druck zuzuführen.

14. Verwendung einer Mikrofiltrationswand (15a) in einem Ausgabesystem für geschäumte Lebensmittelprodukte, umfassend eine Mikrofiltrationsvorrichtung (15), die zur Durchführung eines Verfahrens nach einem der vorhergehenden Ansprüche ausgelegt ist, **dadurch gekennzeichnet, dass** die Oberfläche der Mikrofiltrationswand (15a), die mit dem Lebensmittelprodukt in Kontakt steht, hydrophob ist, wobei die Oberfläche einen Kontaktwinkel mit Wasser von 110° oder mehr aufweist, und wobei die Mikrofiltrationswand (15a) eine Porosität zwischen 60 % und 90 % aufweist, um die Betriebsdauer der Mikrofiltrationsvorrichtung (15) zu verlängern und/oder Schwankungen der Schäumleistung zu verringern.

**Revendications**

1. Procédé destiné à distribuer un produit alimentaire sous forme de mousse, **caractérisé en ce que**

    - un produit alimentaire (P) alimente un dispositif de microfiltration (15) pourvu d'une paroi de microfiltration (15a) comportant des pores transmettant les gaz qui sépare un premier espace (15b) d'un deuxième espace (15d),
    - dans lequel le produit alimentaire (P) est acheminé à travers le premier espace (15b), circulant le long de la paroi de microfiltration (15a), et du gaz alimente le deuxième espace (15d), ou réciproquement, de sorte que le gaz peut être injecté par le biais de la paroi de microfiltration à l'intérieur du produit alimentaire,
    - dans lequel le produit alimentaire subit un foisonnement qui est compris entre 120 et 450 %, et
    - dans lequel la surface de la paroi de microfiltration (15a) du côté le long duquel circule le produit alimentaire est hydrophobe, ladite surface présentant un angle de contact avec l'eau de 110° ou plus, et
- dans lequel la paroi de microfiltration (15a) présente une porosité comprise entre 60 % et 90 %.

2.  Procédé selon la revendication 1, dans lequel le produit alimentaire (P) subit un traitement de mélange et/ou subit une réduction de pression contrôlée en aval du dispositif de microfiltration (15).

3.  Procédé selon la revendication 1, dans lequel le produit alimentaire (P) subit un traitement de mélange en amont du dispositif de microfiltration (15).

4.  Procédé selon l'une quelconque des revendications précédentes, dans lequel la paroi de microfiltration (15a) est une paroi de microfiltration ayant une structure asymétrique et une plage de taille moyenne de pores de 0,1 - 5 $\mu$m, le côté plus ouvert de ladite membrane se situant de préférence du côté le long duquel circule le produit alimentaire.

5.  Procédé selon l'une quelconque des revendications précédentes, dans lequel la paroi de microfiltration (15a) est une membrane de fibres creuses revêtue d'une couche hydrophobe (100), de sorte que la surface présente un angle de contact avec l'eau de 110° ou plus, ladite paroi de microfiltration (15a) comprenant de préférence un matériau de support choisi dans le groupe constitué par du verre, du métal, du caoutchouc, un polymère et de la céramique.

6.  Procédé selon la revendication 5 dans lequel la couche hydrophobe (100) a une épaisseur moyenne comprise entre 20 et 300 nm, et de préférence dans lequel la paroi de microfiltration (15a) avec la couche hydrophobe (100) a une épaisseur moyenne comprise entre 450 et 900 $\mu$m.

7.  Procédé selon la revendication 5 ou 6 dans lequel la couche hydrophobe (100) comporte ou consiste en un matériau ayant une structure de squelette fluorocarboné telle que l'acrylate d'heptadécafluorodécyle ou l'hexafluoropropylène.

8.  Procédé selon l'une quelconque des revendications 5 à 7, dans lequel la couche hydrophobe (100) a été appliquée à la membrane par le biais d'une ou plusieurs des techniques choisies dans le groupe constitué par le revêtement au plasma, le dépôt en phase vapeur, le dépôt chimique en phase vapeur et le revêtement par immersion.

9.  Système de distribution de produit alimentaire sous forme de mousse, conçu pour réaliser un procédé selon l'une quelconque des revendications précédentes, le système étant pourvu d'un support (H) qui contient un produit alimentaire (P) à distribuer, et de moyens de déversement de produit (6) pour déverser le produit alimentaire provenant du support (H), les moyens de déversement de produit (6) étant pourvus d'un dispositif de microfiltration (15) qui est pourvu d'une entrée de produit (15i) pour l'alimentation en produit, le dispositif de microfiltration (15) pouvant être raccordé à une alimentation en fluide (9) afin d'alimenter en gaz le produit pendant le déversement du produit, les moyens de déversement de produit (6) étant en outre de préférence pourvus d'un dispositif de traitement qui est disposé en aval dudit dispositif de microfiltration (15) pour effectuer un traitement de mélange et/ou un traitement de réduction de pression sur le produit alimentaire pourvu en gaz, le dispositif de microfiltration (15) étant pourvu d'une paroi de microfiltration (15a) ayant des pores transmettant les gaz qui sépare un espace d'alimentation en gaz (15d) associé à l'alimentation en fluide d'un canal d'alimentation en produit (15b) associé à l'entrée de produit (15i), **caractérisé en ce que** la surface de la paroi de microfiltration (15a) du côté du canal d'alimentation en produit (15b) est hydrophobe, ladite surface présentant un angle de contact avec l'eau de 110° ou plus, et ladite paroi de microfiltration présentant une porosité comprise entre 60 % et 90 %.

10. Système de distribution de produit alimentaire sous forme de mousse selon la revendication 9, dans lequel la longueur (L) de la paroi de microfiltration (15a) est d'au moins 5 mm et au plus 10 cm, de préférence d'au moins 18 mm et au plus 35 mm.

11. Système de distribution de produit alimentaire sous forme de mousse selon la revendication 9 ou 10, dans lequel la paroi de microfiltration (15a) est une paroi de microfiltration ayant une structure asymétrique et une taille moyenne de pores de 0,1 - 5 $\mu$m, le côté plus ouvert de ladite membrane se situant de préférence du côté le long duquel circule le produit alimentaire.

12. Système de distribution de produit alimentaire sous forme de mousse selon l'une quelconque des revendications 9 à 11, dans lequel la paroi de microfiltration (15a) est une membrane de fibres creuses revêtue d'une couche hydrophobe (100), ladite paroi de microfiltration comprenant de préférence un matériau de support choisi dans le groupe constitué par du verre, du métal, du caoutchouc, un polymère et de la céramique, et dans lequel la couche hydrophobe comporte ou consiste de préférence en un matériau ayant une structure de squelette fluorocarboné telle que l'acrylate d'heptadécafluorodécyle ou l'hexafluoropropylène.

13. Système de distribution de produit alimentaire sous forme de mousse selon l'une quelconque des revendications 9 à 12, pourvu d'une alimentation en gaz ou pouvant être raccordé à celle-ci pour alimenter en gaz à pression superatmosphérique le dispositif de microfiltration (15).

14. Utilisation d'une paroi de microfiltration (15a) dans un système de distribution de produit alimentaire sous forme de mousse comprenant un dispositif de microfiltration (15) qui est conçu pour réaliser un procédé selon l'une quelconque des revendications précédentes, **caractérisée en ce que** la surface de ladite paroi de microfiltration (15a) qui est en contact avec le produit alimentaire est hydrophobe, la surface présentant un angle de contact avec l'eau de 110° ou plus, et dans laquelle la paroi de microfiltration (15a) présente une porosité comprise entre 60 % et 90 %, en vue de prolonger la durée de vie opérationnelle dudit dispositif de microfiltration (15) et/ou de réduire les fluctuations des performances de moussage.

EP 4 604 738 B1

FIG. 1

FIG. 2

17

FIG. 3

FIG. 4

FIG. 5

FIG. 6

Fig. 7

(a)

(b)

Fig. 8a-b

(a)

(b)

(c)

Fig. 9d

(a)
(b)
(c)
(d)

Fig. 10a-d

Figure 11 (a)

Figure 11 (b)

Figure 11(c)

Fig. 11d

Fig. 12a-b

(a)                         (b)                         (c)

Fig.13a-c

Fig. 14

Fig. 15

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022066019 A
- EP 2268173 A
- US 2020360946 A
- JP 2018051483 A
- WO 2011028117 A

**Non-patent literature cited in the description**

- **N.F. HIMMA et al.** Advances in polypropylene-membrane preparation and applications. *J. Polym. Eng.*, 2016, vol. 36 (4), 341-344